**Europäisches Patentamt**

**European Patent Office**

**Office européen des brevets**

(11) Veröffentlichungsnummer: **0 121 801**
A1

# (12) EUROPÄISCHE PATENTANMELDUNG

(21) Anmeldenummer: **84102645.3**

(22) Anmeldetag: **10.03.84**

(51) Int. Cl.³: **B 65 B 69/00**

(30) Priorität: **02.04.83 DE 3312077**
**07.09.83 DE 8325696 U**

(43) Veröffentlichungstag der Anmeldung: **17.10.84**
**Patentblatt 84/42**

(84) Benannte Vertragsstaaten: **AT BE CH DE FR GB IT LI LU NL SE**

(71) Anmelder: **Simon, Georg, Kreisstrasse 1, D-5810 Witten (DE)**

(72) Erfinder: **Simon, Georg, Kreisstrasse 1, D-5810 Witten (DE)**

(74) Vertreter: **Patentanwälte Wenzel & Kalkoff, Ruhrstrasse 26 Postfach 2448, D-5810 Witten (DE)**

(54) **Verfahren und Vorrichtung zum Entleeren von Säcken.**

(57) Die Erfindung betrifft ein Verfahren und eine Vorrichtung (1, 101) zum Entleeren von Säcken. Die Säcke stürzen in einen Fallschacht (5, 102), an dessen Boden sich eine Klinge (7, 110) befindet. Seitlich werden Dorne (12, 111) in den noch gefüllten Sack eingetrieben bzw. der Sack fällt in diese Dorne hinein. Der Sackinhalt rieselt aus der durch die Klinge geschaffenen Öffnung heraus, während der Sack von den Dornen gehalten ist. Anschließend wird der entleerte Sack pneumatisch oder durch Fallenlassen auf eine Weiche aus dem Schacht herausgebracht bzw. durch eine Ablage unter Abstreifung von den Dornen in seine Ausgangslage zurückgebracht, von wo aus seine Beseitigung erfolgt. Es werden keine rotierenden Messer benötigt, so daß auch keine Gefahr besteht, daß der Sack zerfetzt wird und so Sackreste in den zu füllenden Behälter oder in die zu befüllende Maschine gelangen.

ACTORUM AG

Patentanwälte
Wenzel & Kalkoff
Postfach 2448
Ruhrstraße 26
D 5810 Witten

1

Anmelder:                Herr Georg Simon

                         Kreisstr. 1

                         5810 Witten 6

Bezeichnung:             Verfahren und Vorrichtung zum Ent-
                         leeren von Säcken

Die Erfindung betrifft ein Verfahren und eine Vorrichtung zum Entleeren von Säcken in einen Behälter oder dergleichen, wobei jeder Sack aufgeschnitten und von einem für den Sackinhalt durchlässigen Haltemittel gehalten wird.

Die bisher bekannten Vorrichtungen und Verfahren zur Entleerung von Säcken zeichnen sich dadurch aus, daß entlang eines siebartigen Förderbandes rotierende Messer vorhanden sind, die den Sack annhähernd in voller Länge aufschlitzen, also zweiteilen. Der Sackinhalt fällt dabei durch das Sieb in einen darunter stehenden Behälter oder direkt in eine Maschine hinein, und die zerschnittenen Sackreste werden mit Hilfe von Pickelwalzen oder Hakenförderern aus dem Rieselbereich herausgebracht.

Insbesondere bei einem klebrigen Sackinhalt, also beispielsweise bei einem Kunststoffgranulat, das bei relativ hohen Umgebungstemperaturen entleert werden soll,

0121801

2

kommt es immer wieder vor, daß sich an den rotierenden Messern, die aufgrund ihrer Rotationsbewegung weiter zu einer Temperatursteigerung des Gutes beitragen, Materialablagerungen bilden, die einen ordentlichen Schnitt zunehmend unmöglich machen. Als Folge dieser Erscheinung werden die Säcke immer mehr zerfetzt und weniger geschnitten, so daß mit dem herausrieselnden Sackinhalt auch Sackschnitzel, also Papier- oder Kunststoffteile in den Behälter oder in die darunter stehende Maschine gelangen. In fortgeschrittenem Stadium ist ein geordneter Funktionsablauf nicht mehr gewährleistet. Generell ist die Entleerung nach dieser Art nicht besonders gut, da sich in den zerschnittenen Säcken Toträume bilden,die nicht vollständig entleert werden und mit den entleerten Sackteilen ausgetragen werden; sie gehen also als Schwundmasse negativ in die Ausbringung ein.

Ein weiterer Nachteil derartiger Vorrichtungen und Verfahren liegt darin, daß bei Umstellung von einem Gut auf das andere eine sehr sorgfältige Reinigung aller an der Entleerung beteiligten Bauteile notwendig ist, die sehr mühsam und wegen der oft fehlenden Zugänglichkeit auch nicht vollständig durchgeführt werden kann.

Es ist demnach Aufgabe der Erfindung, ein Verfahren und eine Vorrichtung zum Entleeren von Säcken vorzuschlagen, bei deren Anwendung auf rotierende Messer verzichtet werden kann und die Reinigung der Vorrichtung ohne großen Aufwand und vollständig gelingt.

0121801

Bezüglich des Verfahrens wird zur Lösung dieser Aufgabe vorgeschlagen , daß jeder Sack aus einer vorgegebenen Höhe auf eine Schneideinrichtung fallengelassen und von einem seitlich der Schneideinrichtung angebrachten Dorn oder von einer Mehrzahl von Dornen, der bzw. die in den Sack eindringen, während der Entleerung gehalten wird, und daß nach der Entleerung der Sack von dem Dorn oder den Dornen abgestreift und aus dem Bereich der Schneideinrichtung abgesaugt oder mechanisch beseitigt wird.

Das erfindungsgemäße Verfahren nutzt also die durch das Herabstürzen des Sackes aus einer vorgegebenen Höhe vorhandene kinetische Energie, um das Aufschneiden des Sackes herbeizuführen, der im übrigen durch die am unteren Ende des Fallschachtes vorzugsweise in der Mitte angeordnete Klinge aufgefangen und aufgeschlitzt wird, wobei sich der Schnitt durch einen Platzvorgang weiter ausbilden kann als die Länge der Klinge.

Gemäß einer Weiterbildung des erfindungsgemäßen Verfahrens ist vorgesehen, daß der Dorn oder die Dorne nach dem Fall des Sackes auf den Sack zubewegt und nach der Entleerung zurückgezogen werden. Bei der Zurückziehung der Dorne wird der dann leere Sack abgestreift, wobei als Abstreifer die zugeordnete Seitenwand des Fallschachtes dient. Gemäß einer anderen Variante des Verfahrens wird der Sack vor dem Fall von einer Ablage gehalten, die zur Einleitung des Falles gänzlich oder teilweise bis unter das Niveau der Schneideinrichtung abgesenkt wird, und die nach der Entleerung durch eine Aufwärtsbewegung den Sack von dem Dorn bzw. den Dornen abstreift und in seine Ausgangslage zurück anhebt.

Bei dem Verfahren gemäß der Erfindung gelingt auch das Entleeren von Säcken, wenn darin leicht klebriges Gut enthalten ist, da keine rotierenden Messer vorhanden sind, deren Schneidflächen sich nach und nach zusetzen können. Wenn tatsächlich bei dem erfindungsgemäßen Verfahren sich an der Schneideinrichtung Schnittgut absetzen sollte, besteht eine sehr hohe Wahrscheinlichkeit, daß durch die schlagartige Beaufschlagung infolge des herabstürzenden Sackes eine Selbstreinigung stattfindet. Doch auch bei fehlender Selbstreinigung ist noch immer eine Funktion sichergestellt, da die Schneideinrichtung gegebenenfalls nur die Stelle festlegt, an der der Sack beim Herabstürzen ohnehin von sich aus platzt.

Gemäß einem ersten Vorschlag für die Durchführung des genannten Verfahrens ist vorgesehen, daß am unteren Ende eines Fallschachtes eine feststehende Klinge angeordnet ist, und daß auf mindestens einer Seite der Fallschachtes ein oder mehrere Dorne quer zur Schachtlängsachse verschieblich gelagert sind.

Eine Vorrichtung dieser Art ist leicht zu reinigen. Der im wesentlichen vertikale Schacht weist bei zurückgezogenen Dornen keinerlei Vorsprünge oder Taschen auf, in denen sich Schüttgut aus den Säcken festsetzen kann. Die einzige Stelle, an der sich evtl. Reste aus einer Charge festsetzen können, ist die Schneideinrichtung in Form der Klinge, die jedoch glattflächig ausgebildet ist, so daß deren Reinigung keinerlei Schwierigkeiten bereitet.

Vor dem Herabstürzen eines zu entleerenden Sackes in den Fallschacht muß noch der vorangehend entleerte Sack aus diesem entfernt werden. Für diesen Arbeitsgang schlägt die Erfindung in Weiterbildung mehrere Möglichkeiten vor.

Zum einen kann der leere Sack, der aus ein- oder mehrschichtiger Folie oder  aus ein- oder mehrschichtigem Papier besteht, aus dem Schacht herausgesaugt werden, was z.B. mit Hilfe eines Exhaustors oder einer Vakuumkammer geschehen kann, die für den Augenblick des Sackabsaugens geöffnet und anschließend durch ein Ventil oder eine Klappe wieder geschlossen wird. Dabei wird der Sack auf die Querschnittsgröße der Öffnung bzw. der Unterdruckleitung zusammenge-

drückt und dann nach Art einer Rohrpost darin befördert.

Wenn der dafür erforderliche Aufwand gescheut wird, kann der Sack auch nach unten aus dem Schacht herausgebracht werden, und zwar durch einfaches Fallenlassen nach dem Zurückziehen des Dornes oder der Dorne und bei zur Seite geschwenkter oder zur Seite verschobener Klinge. Eine unterhalb des Schachtes befindliche Weiche besorgt dabei die Trennung von entleerten Säcken einerseits und vom Sackinhalt andererseits, wobei in der Stellung der Weiche , in der der Schacht Verbindung mit dem darunter stehenden Behälter hat, die Öffnung zum Auslenken des entleerten Sackes völlig abgedichtet ist.

Bei Verwendung von mehreren Dornen können diese von zwei sich gegenüberliegenden Seiten aufeinander zubewegt werden, wobei sie nur die jeweils ihnen zugewandte Seite des Sackes durchdringen. Sowohl beim Vorfahren der Dorne als auch beim Zurückziehen nach der Entleerung des Sackes wirkt auf letztere so gut wie keine Seitenkraft, da der Kraftangriff jeweils symmetrisch ist.

Bei einseitig vorfahrbaren und zurückziehbaren Dornen wird der Sack gegen die gegenüberliegende Wand gedrückt bzw. gegen die Wand gezogen, aus der die Dorne hervortreten, was jedoch in der Regel nicht schadet und die Funktion nicht in Frage stellt. Bei nur einseitig angeordneten Dornen ergibt sich ein geringerer Bauaufwand, allerdings müssen die Dorne stabiler und länger sein,damit sie den Sack vollständig durchdringen. Im Einzelfall ist jedoch das noch nicht einmal Bedingung für eine sichere Funktion.

Gemäß einem weiteren Vorschlag der Erfindung zur Durchführung des Verfahrens ist vorgesehen, daß am oberen Rand des Fallschachtes eine Ablage zur Aufnahme des gefüllten bzw. geleerten Sackes angeordnet ist, daß seitlich der Klinge Dorne vorgesehen sind, und daß die Ablage gänzlich oder teilweise bis unter das Niveau der Klinge abrupt absenkbar ist.

Bei diesem Vorschlag der Erfindung wird der Sack ebenfalls nicht mit sich bewegenden Messern behandelt, sondern er fällt aufgrund seines Eigengewichtes im Augenblick der abgesenkten Ablage auf eine Klinge, die ihn in der Regel über seine gesamte Breite etwa in seiner Mitte aufschlitzt. Die Klinge ist so eingestellt, daß annähernd im selben Augenblick die beiden Sackenden durch die seitlich angeordneten Dorne am weiteren Fall gehindert und aufgespießt werden, so daß der Sack leicht eingeknickt wird und mit der gespannten Seite voran in die Klinge stürzt. Die Dorne können durch andere Haltemittel wie rauhe Flächen, Riffelbleche oder dergleichen ersetzt sein, die ohne schädliche Wirkung ebenfalls die Sackhaut durchdringen können.

Nach der Entleerung nimmt die aufwärtsbewegte Ablage den entleerten Sack einschließlich aller Sackreste in die Ausgangslage mit, wobei die Ablage bezüglich der Dorne bzw. anderer Haltemittel und der Klinge quasi als Abstreifer dient, so daß die vollständige Beseitigung aus der Entleerungsposition sehr zuverlässig gelingt. Als besonders zweckmäßig hat sich eine Auflage erwiesen, die aus zwei Schwenkgittern besteht, die zusammen in der aufgeschwenkten Lage eine durchgehende Ablage bilden und in der abgeschwenkten Lage an entsprechenden Innenseiten des Fallschachtes anliegen, von denen aus die Dorne aufragen.

Zur Anpassung an unterschiedliche Sackgrößen ist die feststehende Klinge in der Höhe einstellbar, gegebenenfalls kann auch die Anordnung und Länge der Dorne variiert werden. Nach der Entleerung und nach dem Aufheben auf das ursprüngliche Niveau durch die Ablage wird die Sackhülle abgesaugt oder mit Hilfe eines oder mehrerer Schwenkarme von der Ablage gestreift. Danach kann sie mit Hilfe eines Walzenpaares verdichtet und weitertransportiert werden.

Für besonders leichte Säcke bzw. für Säcke mit besonders zäher Haut empfiehlt sich oberhalb der Ablage die Anbringung eines vertikal beweglichen Stempels, der zusammen mit der Ablage bzw. mit einer geringfügigen zeitlichen Verschiebung ebenfalls abrupt abgesenkt wird. Mit Hilfe dieses Stempels wird dann der Sack gewaltsam in die Klinge getrieben, was zuverlässig zu dessen Aufschlitzung führt. In dieser Weise werden die Wirkungen mangelnder Schwerkraft bzw. sogar einer stumpfen Klinge weitgehend kompensiert, ohne daß die Vorrichtung besonders aufwendig oder im Funktionsablauf abweichend gestaltet werden muß. Der vertikale Stempel kann von Hand, pneumatisch, hydraulisch oder elektrisch bewegt werden, es kommt nur darauf an, daß seine Bewegung weitgenug hinabreicht, um den Sack in die Klinge zu treiben, und daß andererseits der Aufwärtshub lang genug ist, um bei aufgeschwenkter bzw. obenstehender Ablage das Auflegen eines noch nicht geleerten Sackes zu ermöglichen.

Die Bewegung der Ablage kann im einfachsten Fall von Hand erfolgen, beispielsweise durch Lösen eines Riegels, nachdem ein gefüllter Sack auf die Ablage gelegt ist. Die Rückschwenkbewegung gelingt dabei besonders leicht, da der Sack zu diesem Zeitpunkt geleert ist und so gut wie kein eigenes Gewicht aufweist. Bei aufwendigeren Vorrichtungen kann eine elektrische Betätigung vorgesehen sein, die bevorzugte Bewegung der Ablage geschieht jedoch mit Hilfe von Pneumatik- oder Hydraulikzylindern, das gleiche gilt für evtl. vorhandene Schwenkarme zur Beseitigung der leeren Sackhülle.

Bei scharfkantigen oder spitzangeschliffenen Dornen besteht eine sehr hohe Wahrscheinlichkeit, daß sie in die Sacküle eindringen, wobei es nicht auf die Art der Vorrichtung ankommt. Diese Dorne können als Rohr ausgebildet und an eine intermittierend betätigte Luftquelle angeschlossen sein. Wenn dabei die so gestalteten Dorne noch in der Nähe der Sackenden die Sackhülle durchdringen, wird von den Sackenden aus eine Druckwelle erzeugt, die das in dem Sack enthaltene Gut auf den durch die Klinge geschaffenen Schlitz zutreibt. In dieser Weise wird eine vollständige Entleerung jedes Sackes weiter gefördert.

Zusätzliche Weiterbildungen und weitere Einzelheiten der Erfindung werden nachfolgend anhand eines Ausführungsbeispiels, das in der Zeichnung dargestellt ist, näher erläutert. In der Zeichnung zeigen:

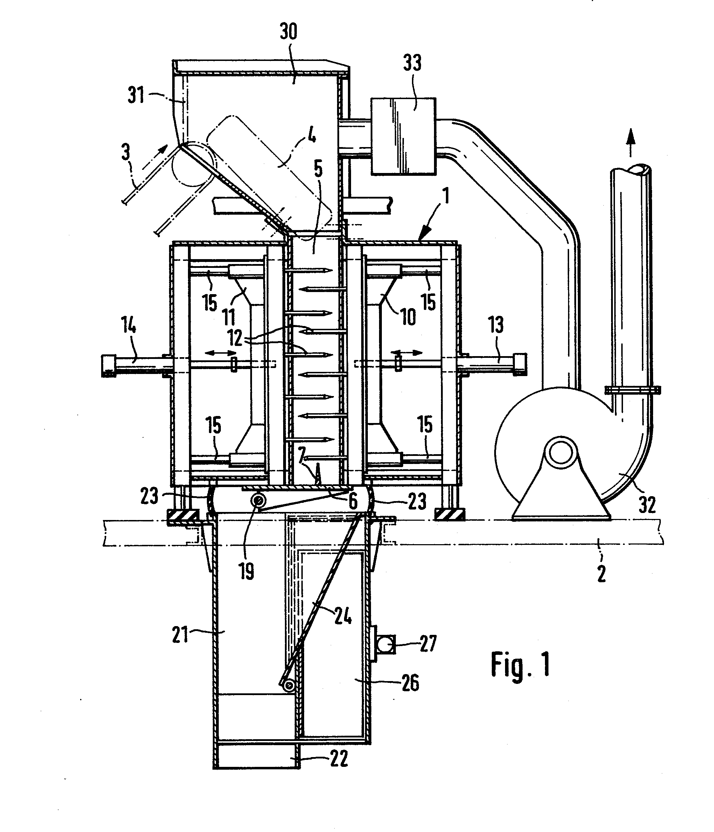

Fig. 1    eine schematische Seitenansicht einer erfindungsgemäßen Vorrichtung zur Entleerung von Säcken in einem ersten Ausführungsbeispiel,

Fig.    eine schematische Draufsicht auf die Vorrichtung gemäß Fig. 1 ohne deren oberen Bereiche,

Fig. 3    eine weitere Seitenansicht der Vorrichtung gemäß Fig. 1 in zum Teil vereinfachter Darstellung,

Fig. 4    eine schematische Seitenansicht eines weiteren Ausführungsbeispiels einer erfindungsgemäßen Vorrichtung zum Entleeren von Säcken,

Fig. 5    eine Draufsicht auf die Vorrichtung gemäß Fig. 4 mit abgenommenem Oberteil und

Fig. 6    eine Seitenansicht der Vorrichtung gemäß Fig. 1.

In den Figuren 1 - 3 ist ein erstes Ausführungsbeispiel einer erfindungsgemäßen Vorrichtung 1 dargestellt, deren Rahmen im wesentlichen aus Stahlträgern gebildet ist. Sie ist mit Hilfe von Schwingfüßen auf einer Bühne 2 aufgestellt, die oberhalb eines Behälters oder einer Maschine angeordnet ist und die Voraussetzungen schafft, daß das die Vorrichtung 1 verlassende Gut direkt in den Behälter oder die Maschine rieseln kann. Zur Einspeisung dient ein Förderband 3, mit dessen Hilfe Säcke 4 an die Aufgabestelle der Vorrichtung 1 gebracht werden. Von hier aus rutscht jeder Sack 4 in einen vertikalen Schacht 5, der zu Beginn einer Entleerung völlig glattflächig und an seinem unteren Ende durch eine Auffangplatte 6 verschlossen ist. Die in den Figuren 1 - 3 in den Schacht hineinragenden Dorne 12 sind also in der Ausgangsstellung soweit zurückgezogen, daß ihre Spitzen außerhalb des Lichtraumprofiles des Fallschachtes 5 liegen.

Etwa in der Mitte des Fallschachtes 5 ist auf der Auffangplatte 6 der dem Fallschacht 5 zugewandten Seite ein Messer bzw. eine Klinge 7 starr angebracht, deren Schneidfläche vorzugsweise zick-zack-förmig nach Art einer Säge gestaltet ist. Sie ist ca. 3 bis 7 cm hoch und mit Hilfe von Füßen an der Platte 6 angeschraubt oder direkt angeschweißt. Wenn ein Sack in den von Dornen 12 befreiten Fallschacht 5 hineinstürzt, trifft die Unterseite des Sackes auf das Messer 7 auf, so daß er der Länge nach aufgeschnitten wird bzw. aufplatzt. Im selben Augenblick werden die Dorne 12 vorgefahren, die jeweils an Schlitten 10 und 11 angebracht sind und die Seitenwände des Fallschachtes 5 durchdringen. Die Vorwärtsbewegung erfolgt durch Luftzylinder 13 und 14 im Zentrum jedes Schlittens bis in die in den Figuren dargestellte Lage, wobei Führungsstangen 15 und entsprechende Buchsen an den Schlitten 10 und 11 für eine sichere Funktion und genaue Positionierung sorgen.

Sobald die Dorne 12 die in den Figuren 1 - 3 dargestellte Lage erreicht haben, wird die Auffangplatte 6 zusammen mit der Klinge 7 abwärts um ca. 100° mit Hilfe von Luftzylindern 20 um ein Lager 19 geschwenkt, so daß der Weg für den Sackinhalt aus dem Sack 4 heraus freigegeben wird.

Das herausrieselnde Gut gelangt über eine Schurre 24 in einen Trichter 21, der mit einem Auslauf 22 versehen ist. An diesem kann ein Schlauch oder ein Längenkompensator angeschlossen sein, der eine direkte Verbindung mit einem darunterstehenden Behälter oder einer Maschine (nicht dargestellt) hat, so daß eine staubfreie Einleitung des Gutes gewährleistet ist. Die.

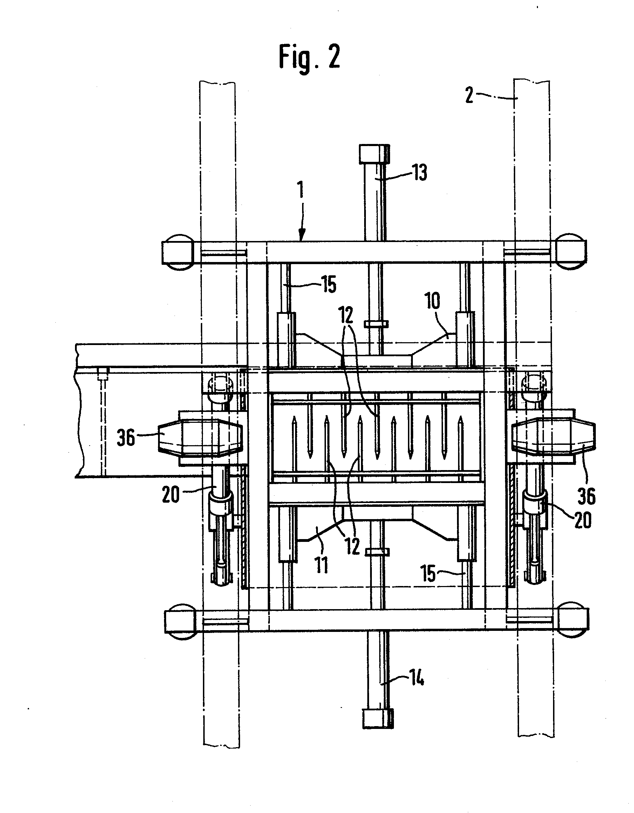

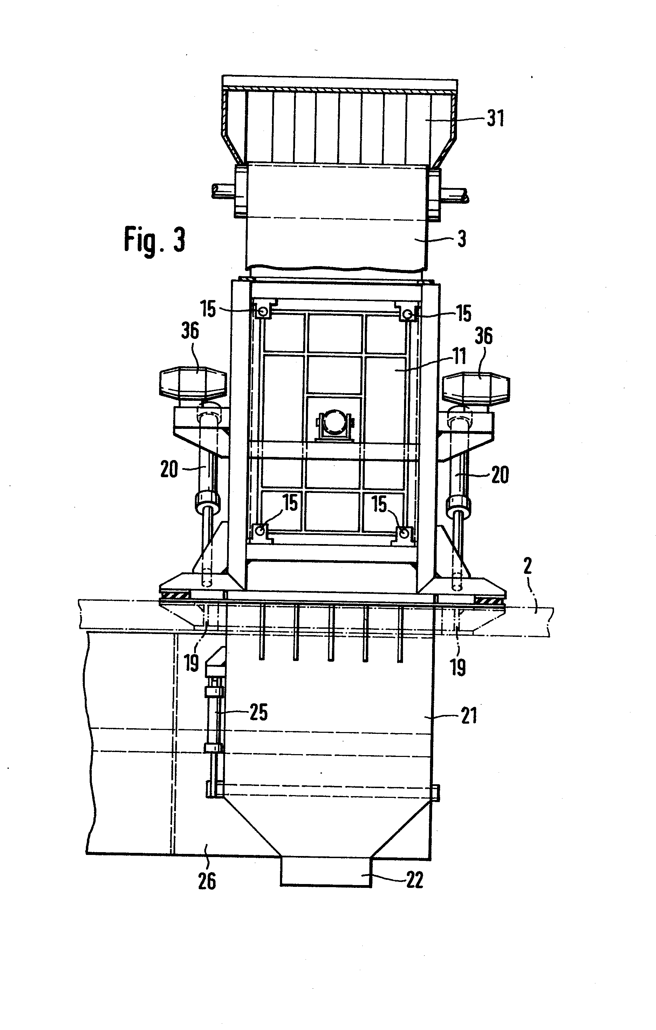

Rieselbewegung ist gegebenenfalls durch Rüttler 36 (Fig. 2) und Fig. 3) unterstützt, die entweder fortlaufend oder nur während des eigentlichen Entleerungsvorganges tätig sind. Der Trichter 21 ist fest an der Bühne 22 angebracht, und die Dichtheit zwischen der Vorrichtung 1 und dem Trichter 21 wird mit Hilfe einer elastischen Abdichtung 23 herbeigeführt, die auch die Schwingungen der Vorrichtung 1 gegenüber der Bühne 2 ausgleicht. Nach der vollständigen Entleerung eines Sackes 4 in der beschriebenen Weise, die ca. 2 - 3 Sekunden dauert, wird die Schurre 24 aus der in der Fig. 1 dargestellten Lage mit Hilfe eines weiteren Luftzylinders 25 in eine annähernd vertikale Lage verschwenkt, in der sie direkt unterhalb des Schachtes 5 eine Öffnung innerhalb des Trichters 21 freigibt. Durch diese Öffnung fällt der entleerte Sack 4 nach dem Zurückziehen der Dorne 12 hindurch in einen Schieber, der mit Hilfe eines weiteren Luftzylinders 27 seitlich verschoben wird und dabei den entleerten Sack 4 mitnimmt. Anschließend wird die Schurre 24 wieder in die in der Fig. 1 dargestellten Lage zurückgeschwenkt, die Auffangplatte 6 ebenfalls in die dargestellte Lage zurückgeschwenkt, und ein noch nicht entleerter Sack 4 kann erneut in den Schacht 5 fallengelassen werden.

Von der Steuerung der Vorrichtung her läuft in etwa folgender Vorgang ab: Das Herabfallen eines Sackes 4 auf die Auffangplatte 6 wird durch einen Schwingungsaufnehmer oder durch eine Lichtschranke festgestellt, deren Impuls zum Vorfahren der Dorne 12 über die Luftzylinder 13 und 14 ausgenutzt wird. Mit Hilfe von Endschaltern an den Schlitten 10 und 11 wird die vorgefahrene Position abgefragt und dieses Signal zum Schwenken der Auffangplatte 6 und gegebenenfalls zum Einschalten der Rüttler 36 ausgenutzt. Durch geschickte Einstellung der Luftzylinder 20 zum Verschwenken der Auffangplatte 6 kann eine Schwenkzeit von ca. 3 Sekunden erzielt werden, in der der gesamte Sackinhalt herausgerieselt ist und die Auffangplatte 6 in ihrer Endstellung einen Endschalter betätigt. Dessen Signal wird zum Verschwenken der Schurre 24 durch den Luftzylinder 25 und zum Zurückfahren der Schlitten 10 und 11 in ihre Ausgangsstellung ausgenutzt.

Dabei muß sichergestellt sein, daß die Schurre 24 ihre annähernd vertikale Stellung eher oder dann erreicht, wenn die Schlitten 10 und 11 gerade ganz zurückgefahren sind. Nach Ablauf einer vorgegebenen, durch ein Zeitrelais kontrollierten Zeitspanne, in der der entleerte Sack in den Schieber 26 hineinfällt, wird die Schwenkbewegung der Schurre 24 rückgängig gemacht und ebenfalls die Auffangplatte nach Erreichen der Schließlage der Schurre 24 in die Ausgangslage zurückgeschwenkt. Zu diesem Zeitpunkt ist die Vorrichtung 1 für einen erneuten Entleerungsvorgang eines weiteren Sackes 4 bereit, der nun in den Fallschacht 5 fallengelassen werden kann.

Statt der Luftzylinder können auch jeweils Hydraulikzylinder benutzt werden, es kommt lediglich darauf an, daß die erforderlichen Bewegungen relativ schnell ausgeführt werden, damit die Vorrichtung gut ausgelastet ist. Zu einer guten Auslastung kann auch eine Vereinzelungssperre am Aufgabeende des Fallschachtes 5 beitragen, die den jeweils nächsten Sack 4 zum frühest möglichen Zeitpunkt in den Schacht fallen läßt, also z.B. zu dem Zeitpunkt, zu dem die Auffangplatte 6 gerade geschlossen ist. Abweichend davon kann noch eine Vereinzelungssperre im Bereich des Förderbandes 3 vorgesehen sein, die dann auf den Funktionsrhythmus der Vorrichtung abgestimmt sein muß.

Beim Auftreffen eines Sackes 4 auf die Auffangplatte 6 kann eine gewisse Federung in Kauf genommen werden, die den daraus resultierenden Stoß auf die Vorrichtung 1 auffängt und deshalb zu einer Schonung der Vorrichtung beiträgt. Die Luftzylinder 20 sind dann genügend groß dimensioniert, so daß eine durch den Schlag herbeigeführte, leichte Abwärtsbewegung der Platte 6 wieder rückgängig gemacht wird. So ist sichergestellt, daß der herabgestürzte Sack nicht aus dem Eingriffsbereich der Dorne 12 gelangt.

Abweichend von dem dargestellten Ausführungsbeispiel kann statt des Schiebers 26 an dieser Stelle ein Förderband vorgesehen sein, daß gegebenenfalls mit Haken bestückt ist und den Weitertransport der geleerten Säcke 4 beispielsweise in eine Ballenpresse oder dergleichen bewirkt.

Die Aufgabestelle des Fallschachtes 5 ist mit einer Haube 30 abgedeckt, die im Bereich des Förderbandes 3 mit einem Elementvorhang 31 abgedichtet ist, der das Eintreten von Säcken 4 gestattet, im übrigen jedoch das Ausdringen von Staub weitgehend verhindert. Die Haube 30 wird über einen Filter 33 von einem Ventilator 32 abgesaugt, so daß evtl. bis hierhin aufgestiegener Staub entfernt wird und nicht aus der Vorrichtung dringen kann.

Normalerweise ist trotz sich ändernder Abmessungen unterschiedlicher Säcke keine Umrüstung der Vorrichtung 1 erforderlich, sondern sie deckt von vornherein ein sehr großes Spektrum von Sackgrößen ab. Ist dennoch ausnahmsweise eine Umrüstung erforderlich, kann der Fallschacht 5 gegebenenfalls durch Platten ausgekleidet und dadurch in seiner Form beeinflußt werden, oder die Seitenwände können versetzt werden. Mit der erfindungsgemäßen Vorrichtung können also Säcke 4 der unterschiedlichsten Größen und Konfiguration entleert werden, wobei dem Aufprall durch eine entsprechende Stabilität Rechnung zu tragen ist, der gerade das Wesen der Erfindung ausmacht.

Die verwendeten Dorne sind in einem speziellen Anwendungsfall z.B. bis zu 20 cm lang und 8 - 10 mm dick. Für eine ausreichende Halterung des Sackes vor und während der Entleerung genügt eine Eindringtiefe von wenigen Zentimetern, wenn die Dorne von zwei sich gegenüberliegenden Seiten eingetrieben werden.

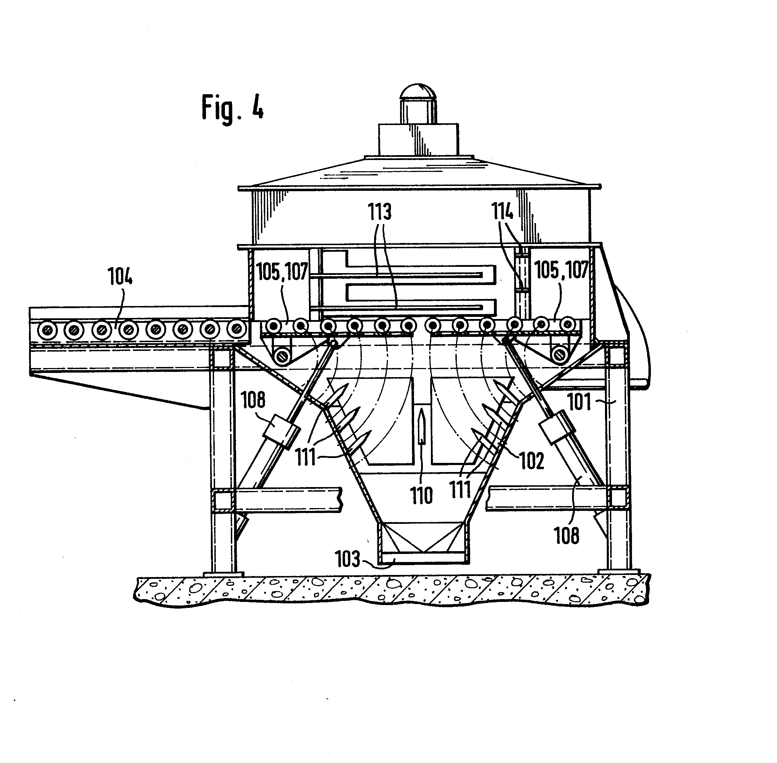

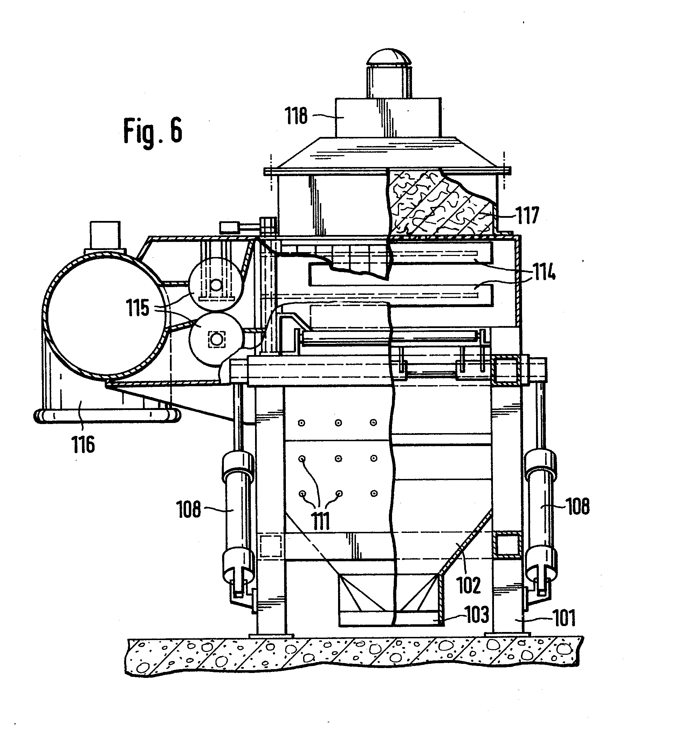

In den Figuren 4 - 6 ist ein weiteres Ausführungsbeispiel einer Vorrichtung zum Entleeren von Säcken dargestellt. Sie besteht im wesentlichen aus einem Gestell 100, an dem alle wichtigen Teile aufgehängt sind. Dazu gehört in erster Linie ein Fallschacht 102, der an seinem unteren Ende eine gegebenenfalls verschließbare Öffnung 103 aufweist. Hier kann ein Behälter untergestellt oder eine Maschine angeschlossen werden, beispielsweise eine Kunststoffspritzmaschine, die mit Granulat gefüttert werden muß. Über eine Zuführung 104 werden die Säcke von der Seite einer Ablage 105 oberhalb des Fallschachtes 102 zugeführt, die aus zwei Schwenkgittern 107 besteht und mit Hilfe von Pneumatikoder Hydraulikzylindern 108 in die gestrichelt dargestellte Position verstellt werden kann.

Wenn bei zunächst aufgeschwenkten Schwenkgittern 107 ein Sack bis in die Mitte des Fallschachtes 102 voranbewegt worden ist, wird durch eine rasche Betätigung des Zylinders 108 quasi ein Fall des Sackes verursacht, der mit seiner Unterseite voran in eine in der Mitte des Fallschachtes 102 angeordnete, feststehende Klinge 110 stürzt. Dabei wird er über annähernd seine ganze Breite aufgeschlitzt, wobei die noch gefüllten Enden des Sackes von Dornen 11 zurückgehalten werden, die mehr oder weniger tief in den Sack eindringen und noch vor dem vollständigen Schnitt durch die Klinge 110 eine Knickung des Sackes hervorrufen.

Die Knickung des Sackes begünstigt die Aufschlitzung durch die Klinge 110, und zur Herbeiführung dieser Verhältnisse hat sich eine Form des Fallschachtes 102 als besonders günstig herausgestellt, bei der die sich gegenüberliegenden Seiten, auf denen die Haltemittel in Form der Dorne angebracht sind, zwischen sich einen Öffnungswinkel von ca. 60° einschließen. Je nach Sackgröße und Höheneinstellung der Klinge 110 kann dann stets eine Fallkonstellation für einen Sack einer vorgegebenen Größe gefunden werden, bei der beim Auftreffen auf die Klinge 110 bereits eine leichte Vorknickung des Sackes durch die Dorne 111 stattgefunden hat, ohne daß jedoch die Fallgeschwindigkeit des Sackes bereits nennenswert gebremst ist. Bei der insbesondere aus der Fig. 4 deutlich erkennbaren Anordnung der Schwenkgitter 107 mit

ihren Schwenkachsen am oberen Rand der einen Winkel von 60° einschließenden Schrägflächen sind die Schwenkgitter 107 so weit aus dem Entleerungsbereich herausgeschwenkt, daß sie normalerweise in der Entleerungslage den Sack bzw. die Sackhülle nicht mehr berühren.

Erst nach dem Entleerungsvorgang, der gegebenenfalls durch an dem Fallschacht angebrachte Rüttler unterstützt werden kann, werden die Schwenkgitter 107 mit Hilfe der Zylinder 108 wieder aufwärtsgeschwenkt, wobei der auf den Dornen 111 und auf der Klinge 110 gefangene Sackrest rückstandslos abgestreift und in die Ausgangslage zurückbefördert wird. Da der Sack nur eingeschnitten bzw. eingestochen ist und die Beseitigungsbewegung im wesentlichen entlang der Klinge aufwärts und entlang der Dorne 111 erfolgt, kommt es zu keiner Abtrennung von Schnipseln der Sackhülle, sondern es wird ein zusammenhängender Sackrest in die Ausgangslage zurückbefördert.

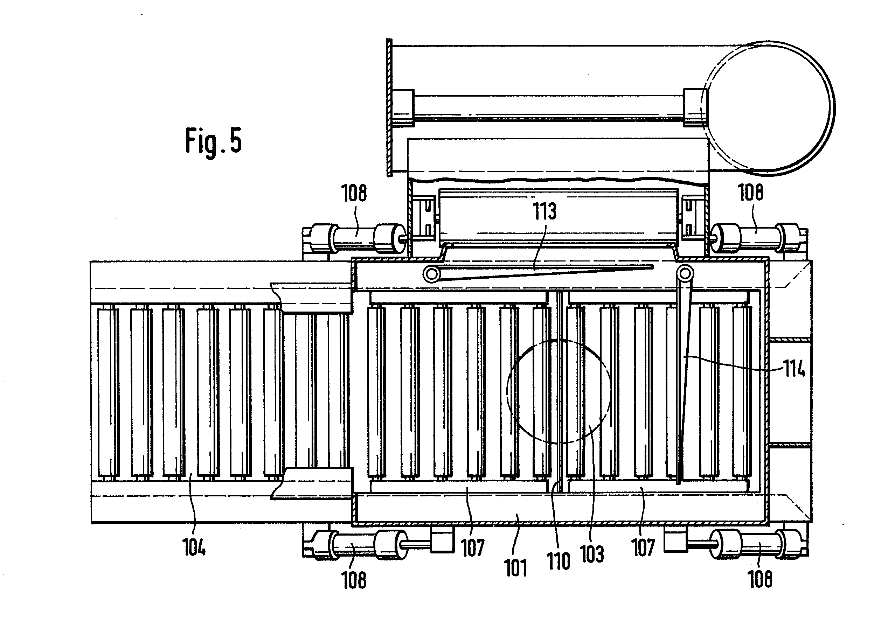

Oberhalb der Ablage 105 sind zwei doppelte Schwenkarme 113 und 114 angeordnet, die in einer gemeinsamen Schwenkbewegung die Sackhülle von der Ablage 105 streifen. Dieser Vorgang ist am besten aus der Fig. 5 zu erkennen. Hier ist der eine Doppelarm 113 zur Seite geschwenkt, damit ein frischer Sack auf die Auflage 105, also auf die Schwenkgitter 107 aufgebracht werden kann. Nach der Entleerung schwenkt der Doppelarm 113 in dieselbe Lage, in der auch der doppelte Schwenkarm 114 gezeigt ist, und aus dieser Ausgangsposition werden beide Schwenkarme 113 und 114 parallel zur Seitenkante der Auflage 105 verschwenkt, wobei sie ineinandergreifen und die Sackhülle mitnehmen. Diese wird in den Spalt eines dahinter angeordneten Walzenpaares gedrückt, wobei die Sackhülle verdichtet und damit handhabbarer gemacht wird. An das Walzenpaar 115 schließt sich ein Absaugrohr 116 an; hier kann auch jede andere Einrichtung zur Beseitigung der Sackhülle angeordnet sein.

Oberhalb der Schwenkarme 113 und 114 ist noch eine Art Glocke angeordnet, in der ein Filter 117 untergebracht ist. Durch ihn wird ständig mit Hilfe eines elektrisch angetriebenen Exhaustors 118 die Luft innerhalb der Vorrichtung hindurchgesaugt und dabei von möglichen Staubpartikeln befreit. Da die Vorrichtung vollständig gekapselt ist, dringt bei der Entleerung kein Staub in die Umgebung. Die Umstellung auf unterschiedliche Sackgrößen und Sackgewichte sowie auf unterschiedliche Sackmaterialien erfolgt insbesondere durch die Höheneinstellung der Klinge 110. Normalerweise ist sie deltaförmig ausgebildet, also mit einer Spitze in der Mitte und zwei seitlich abfallenden Teilklingen. Es kann jedoch im Einzelfall auch die Verwendung einer sägenartigen Klinge angebracht sein, was gegebenenfalls durch Versuche mit dem Sackmaterial abgestimmt werden muß. Auch die Dorne 111 können gegebenenfalls entfernt, versetzt oder durch kürzere oder längere Dorne ersetzt werden, um bei der gegebenen Entleerungsaufgabe optimale Ergebnisse zu erzielen.

In dem dargestellten Ausführungsbeispiel der Fig. 3 - 6 werden nur Säcke entleert, die ein ausreichendes Eigengewicht aufweisen, um von der Klinge 110 auch ausreichend aufgeschlitzt zu werden. Es sind jedoch Anwendungsfälle möglich, bei denen der Sackinhalt bei einer relativ zähen Sackhaut so leicht ist, daß es aufgrund des Eigengewichtes zu diesem Vorgang nicht kommt. Dann kann etwa oberhalb der Schwenkarme 113 und 114 bei dann höher gesetztem Filter 117 und Exhaustor 118 ein vertikal bewegbarer Stempel vorhanden sein, der den Sack ausreichend tief in die Klinge 110 hineindrückt. Abweichend davon kann das in der Fig. 1 rechte Schwenkgitter 107 etwa oberhalb der Schwenkarme 114 mit einem die Auflage überspannenden Bügel versehen sein, der nach der Betätigung der Zylinder 108 auf der Rückseite des Sackes angreift und diesen ausreichend tief in die Klinge 110 drückt.

Abweichend von der Ausbildung des Absaugrohres 116 als Mundstück einer Absauganlage kann darin auch ein Teller in Längsrichtung der Walzenlängsachse bewegt werden, der die

16

entleerten Säcke im Krümmer des Rohres weiter verdichtet, so daß sie annähernd als Ballen, jedenfalls relativ stark verdichtet, auf ein Förderband oder in einen Abfallbehälter fallen.

Patentanwälte
Wenzel & Kalkoff
Ruhrstr. 26
Postfach 2448
5810 Witten/Ruhr

17

3550 121801

P a t e n t a n s p r ü c h e :

1. Verfahren zum Entleeren von Säcken in einen Behälter
od. dergl., bei dem jeder Sack aufgeschnitten und
von einem für den Sackinhalt durchlässigen Haltemittel
gehalten wird, dadurch g e k e n n z e i c h n e t ,
daß jeder Sack aus einer vorgegebenen Höhe auf eine
Schneideinrichtung fallengelassen und von einem seitlich der Schneideinrichtung angebrachten Dorn oder
von einer Mehrzahl von Dornen, der bzw. die in den
Sack eindringen, während der Entleerung gehalten wird,
und daß nach der Entleerung der Sack von dem Dorn
oder den Dornen abgestreift und aus dem Bereich der
Schneideinrichtung abgesaugt oder mechanisch beseitigt wird.

2. Verfahren nach Anspruch 1, dadurch g e k e n n -
z e i c h n e t , daß der Dorn oder die Dornen nach
dem Fall des Sackes auf den Sack zubewegt und nach
der Entleerung zurückgezogen werden.

3. Verfahren nach Anspruch 1, dadurch g e k e n n -
z e i c h n e t , daß der Sack vor dem Fall von einer
Ablage gehalten wird, die zur Einleitung des Falles
gänzlich oder teilweise bis unter das Niveau der
Schneideinrichtung abgesenkt wird, und daß nach der
Entleerung durch eine Aufwärtsbewegung der Sack von dem
Dorn oder den Dornen abgestreift und in seine Ausgangslage angehoben wird.

18    0121801

4. Vorrichtung zur Durchführung des Verfahrens nach Anspruch 1 und 2, mit einer Schneideinrichtung zum Auftrennen jedes Sackes und mit einer Rückhalteeinrichtung des geöffneten Sackes während der Entleerung, dadurch g e k e n n z e i c h n e t , daß am unteren Ende eines Fallschachtes (5) eine feststehende Klinge (7) angeordnet ist, und daß auf mindestens einer Seite des Fallschachtes (5) ein oder mehrere Dorne (12) quer zur Schachtlängsachse verschieblich gelagert sind.

5. Vorrichtung nach Anspruch 4, dadurch g e k e n n - z e i c h n e t , daß auf zwei sich gegenüberliegenden Seiten des Fallschachtes (5) Dorne (12) verschieblich gelagert sind, die mit Hilfe von motorischen Stellgliedern (13, 14) vor- und zurückfahrbar angeordnet sind.

6. Vorrichtung nach Anspruch 4 oder 5, dadurch g e - k e n n z e i c h n e t , daß die Klinge (7) auf einer Auffangplatte (6) angebracht ist, die in der Schließlage den Fallschacht (5) unten verschließt und in der Öffnungslage die untere Öffnung des Fallschachtes (5) freigibt.

7. Vorrichtung nach Anspruch 6, dadurch g e k e n n - z e i c h n e t , daß die Auffangplatte (6) schwenkbar oder senkrecht zur Mittelachse des Fallschachtes (5) verschieblich gelagert ist und von der geöffneten in die geschlossene Lage und umgekehrt mit Hilfe eines motorischen Stellgliedes (20) verstellbar ist.

8. Vorrichtung nach Anspruch 6 oder 7, dadurch g e - k e n n z e i c h n e t , daß unterhalb der Auffangplatte (6) ein Trichter (21) mit einer beweglichen Schurre (24) angebracht ist, die in der einen Lage eine Öffnung in dem Trichter verschließt und das rieselnde Gut in den Behälter lenkt und in der anderen Lage die Öffnung zur Ablenkung des entleerten Sackes (4) aus dem Behälterbereich freigibt.

9. Vorrichtung nach Anspruch 8, dadurch g e k e n n - z e i c h n e t, daß die Schurre (24) in der die Öffnung verschließenden Lage schräg und in der die Öffnung freigebenden Lage annähernd vertikal ausgerichtet ist.

10. Vorrichtung nach Anspruch 8 oder 9, dadurch g e - k e n n z e i c h n e t, daß neben der Schurre (24) außerhalb des Trichters (21) ein Schieber (26) angebracht ist, in dem die entleerten Säcke (4) aus dem Bereich der Schurre (24) gebracht werden.

11. Vorrichtung nach einem der Ansprüche 4 - 7, dadurch g e k e n n z e i c h n e t, daß der Fallschacht (5) eine gegebenenfalls verschließbare Öffnung erhält, die zum Abführen des entleerten Sackes an eine Saugleitung oder Unterdruckkammer angeschlossen ist.

12. Vorrichtung zur Durchführung des Verfahrens nach Anspruch 1 und 3, mit einer Schneideinrichtung zum Auftrennen jedes Sackes und mit einer Rückhalteeinrichtung des geöffneten Sackes während der Entleerung, dadurch g e k e n n z e i c h n e t, daß in der Mitte eines unten offenen Fallschachtes (102) eine feststehende Klinge (110) angeordnet ist, daß am oberen Rand des Fallschachtes (102) eine Ablage (105) zur Aufnahme des gefüllten bzw. geleerten Sackes angeordnet ist, daß seitlich der Klinge Dorne (111) vorgesehen sind, und daß die Ablage (105) gänzlich oder teilweise bis unter das Niveau der Klinge (110) abrupt absenkbar ist.

13. Vorrichtung nach Anspruch 12, dadurch g e k e n n - z e i c h n e t, daß die Dorne (111) an dem Fallschacht (102) an Abschnitten angebracht sind, die zwischen sich einen Öffnungswinkel von ca. 40° bis 80°, insbesondere von 60° einschließen.

14. Vorrichtung nach Anspruch 12 oder 13, dadurch g e -

k e n n z e i c h n e t, daß die Klinge (10) höhenverstellbar befestigt ist.

15. Vorrichtung nach einem der Ansprüche 12 - 14, dadurch g e k e n n z e i c h n e t, daß die Ablage (105) als zweiteiliges Schwenkgitter (7) ausgebildet ist, dessen jeweilige Drehachse am äußeren Rand des Fallschachtes (102) liegt, und die in aufgeschwenktem Zustand eine durchgehende Ablage bilden.

16. Vorrichtung nach Anspruch 15, dadurch g e k e n n - z e i c h n e t, daß die Drehachse jedes Schwenkgitters (107) oberhalb der Dorne (11) angeordnet ist, und daß in der abgeschwenkten Lage jedes Schwenkgitters (107) die Dorne (11) innerhalb des Gitters liegen und diese überragen.

17. Vorrichtung nach Anspruch 15 oder 16, dadurch g e - k e n n z e i c h n e t, daß jedes Schwenkgitter (107) als Rollengang ausgebildet ist.

18. Vorrichtung nach einem der Ansprüche 12 - 17, dadurch g e k e n n z e i c h n e t, daß oberhalb der Ablage (105) mindestens ein Schwenkarm (113, 114) vorgesehen ist, dessen Schwenkbewegung den geleerten Sack von der Ablage (105) streift.

19. Vorrichtung nach Anspruch 18, dadurch g e k e n n - z e i c h n e t, daß zwei Schwenkarme (113, 114) vorhanden sind, deren vertikale Schwenkachsen an der einen Seite der Ablage (105) angeordnet sind und deren Arme in der eingeschwenkten Lage ineinandergreifen.

20. Vorrichtung nach Anspruch 18 oder 19, dadurch g e - k e n n z e i c h n e t, daß neben dem Schwenkarm oder den Schwenkarmen ein Walzenpaar (116) mit horizontalem Walzenspalt zur Verdichtung und zum Weitertransport des geleerten Sackes angeordnet ist.

21. Vorrichtung nach einem der Ansprüche 12 - 20, dadurch g e k e n n z e i c h n e t, daß oberhalb der Ablage (105) ein vertikal beweglicher Stempel zum Hinabdrücken insbesondere leichter Säcke in die Klinge (110) angeordnet ist.

22. Vorrichtung nach Anspruch 21, dadurch g e k e n n - z e i c h n e t, daß der Stempel als an einem der Schwenkgitter (117) befestigter Bügel ausgebildet ist, der dieses Schwenkgitter (117) überspannt.

23. Vorrichtung nach einem der Ansprüche 4 - 22, dadurch g e k e n n z e i c h n e t, daß die Klinge (110)deltaförmig ausgebildet ist und die Schneidfläche gegebenenfalls zu Spitzen und Tälern geformt ist.

24. Vorrichtung nach einem der Ansprüche 4 - 23, dadurch g e k e n n z e i c h n e t, daß am oberen Ende des Fallschachtes (5, 195) eine Vereinzelungssperre angeordnet ist.

25. Vorrichtung nach einem der Ansprüche 4 - 24, dadurch g e k e n n z e i c h n e t, daß oberhalb des Fall- schachtes (5, 102) eine Haube (30) mit einem Filter (33, 117) und einem Ventilator (32, 118) angeordnet ist.

26. Vorrichtung nach einem der Ansprüche 4 - 25, dadurch g e k e n n z e i c h n e t, daß eine bestimmte An- zahl der Dorne (111) rohrartig ausgebildet und an einer Druckluftquelle angeschlossen ist.

Fig. 1

0121801

## Fig. 2

Fig. 3

Fig. 4

Fig.5

Fig. 6

0121801

**Europäisches Patentamt**

# EUROPÄISCHER RECHERCHENBERICHT

Nummer der Anmeldung

| | EINSCHLÄGIGE DOKUMENTE | | EP 84102645.3 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | GB - A - 1522 880 (NARASAKI SHIP BUILDING)<br><br>* Gesamt * | 1-3, 12,15 | B 65 B 69/00 |
| A | | 13,16, 18,21, 26 | |
| | -- | | |
| Y | SOVIET INVENTIONS ILLUSTRATED, Sections P,Q; Week C05, 12. März 1980, p. 3 SU-Q3<br><br>DERWENT PUBLICATIONS LTD. LONDON, Q 31<br><br>* SU-662-431 (N DONETSK CHEM. MACH) | 1-3, 12,15 | |
| A | | 23,26 | |
| | -- | | |
| A | GB - A - 1 358 794 THOMAS) | 1,4 | |
| | -- | | RECHERCHIERTE SACHGEBIETE (Int. Cl. ³) |
| A | DE - B - 1 040 458 (POHLIG AG) | 1,2,4 | |
| | -- | | B 65 B 69/00 |
| A | DE - A1 - 2 539 529 (BEL-TYNE CO. LTD) | 1,4, 23-25 | B 65 G 65/00 |
| | -- | | B 65 G 69/00 |
| A | DE - A - 2 324 246 (PETERS AG.) | 1,4, 12,20, 25 | |
| | ---- | | |

Der vorliegende Recherchenbericht wurde für alle Patentansprüche erstellt.

| Recherchenort | Abschlußdatum der Recherche | Prüfer |
|---|---|---|
| WIEN | 12-06-1984 | MELZER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82